# DEMANDE DE BREVET EUROPEEN

(11) **EP 0 703 480 A1**
(43) Date de publication de la demande: **27.03.1996**
(21) Numéro de dépôt: 95402139.0
(22) Date de dépôt: 22.09.1995
(51) Int. Cl.: G02B 6/44

(54) **Câble à fibres optiques et dispositif de fabrication d'un tel câble**

(30) Priorité: 26.09.1994 FR 9411437
(71) Demandeur: ALCATEL CABLE, F-92100 Clichy (FR)
(72) Inventeur: Keller, David, F-95400 Vaureal Cergy (FR)
(74) Mandataire: Pothet, Jean Rémy Emile Ludovic

(57) **Abrégé**

La présente invention concerne un câble à fibres optiques comprenant :
- une pluralité de rubans de fibres optiques (2) empilés les uns sur les autres, chaque ruban comportant une pluralité de fibres optiques disposées côte à côte sensiblement dans un même plan et toutes noyées dans un revêtement commun appelé matrice du ruban,
- une gaine extérieure de protection (12) pour assurer la protection du câble (1) contre des efforts de compression radiaux,
- des éléments de renfort pour reprendre les efforts de traction appliqués au câble (1), caractérisé en ce qu'il contient en outre des éléments dits de remplissage (6), en un matériau à base de fibres de renfort, de coefficient de dilatation voisin de celui des fibres optiques, noyées dans une matrice de liaison, les éléments de remplissage (6) occupant partiellement ou entièrement un volume délimité d'une part par la surface externe de l'empilement de rubans (2), et d'autre part par la surface interne de la gaine extérieure (12), de sorte que l'ensemble constitué de l'empilement (2) et des éléments de remplissage (6) a une section transversale externe sensiblement circulaire, les éléments de remplissage (6) étant tels qu'ils sont capables de protéger les rubans contre des efforts radiaux et longitudinaux appliqués au câble (1) et de s'opposer à une contraction du câble (1) de plus de 0,2%.

## Description

La présente invention concerne un câble à fibres optiques, ainsi qu'un dispositif pour la fabrication d'un tel câble. Plus précisément, elle concerne un câble à fibres optiques du type comprenant un empilement d'une pluralité de rubans de fibres optiques. On rappelle qu'un ruban de fibres optiques est de manière générale constitué de plusieurs fibres optiques disposées côte à côte sensiblement dans un même plan et maintenues ensemble au moyen d'une matrice commune dans laquelle elles sont noyées.

De tels câbles sont connus notamment par le brevet US-4 078 853. Ils comprennent de façon classique:
- un empilement d'une pluralité de rubans de fibres optiques enroulé en hélice sur lui-même,
- un tube de protection interne contenant l'empilement de rubans qui y est disposé de manière libre (ou lâche), c'est-à-dire avec un jeu radial important, ce tube étant destiné notamment à protéger les fibres contre des efforts extérieurs radiaux et longitudinaux auxquels le câble peut être soumis, à servir éventuellement de barrière thermique pour protéger les fibres contre des chaleurs excessives lors de la fabrication du câble, et à s'opposer aux contractions de la gaine extérieure risquant d'apparaître notamment lors de la fabrication de cette dernière, et plus généralement lors de diminutions de température auxquelles peut être soumis le câble ; en pratique, il est souhaitable, pour protéger les fibres optiques, que les contractions résultantes du câble soient limitées à environ 0,2%,
- une gaine extérieure de protection pour assurer la résistance du câble à des efforts de compression radiaux, renforcée au moyen d'éléments de renfort destinés à reprendre les efforts de traction auxquels est soumis le câble, afin d'assurer la protection mécanique des fibres optiques, les éléments de renfort ayant à cet effet un module d'élasticité en traction et un allongement à la rupture supérieurs à ceux des fibres optiques.

L'empilement de rubans est disposé de manière libre dans le tube de protection interne afin d'être découplé de ce dernier lorsque le tube subit notamment des efforts longitudinaux de compression. En effet, le tube étant constitué d'un matériau plastique dont le coefficient de dilatation est beaucoup plus élevé que celui des fibres optiques, ces dernières risquent de voir leurs performances dégradées en présence d'efforts longitudinaux de traction importants. En les découplant du reste du câble, on évite ce problème. En pratique, le rapport entre la section de l'empilement de rubans et celle du volume délimité par le contour interne du tube de protection est compris entre 0,4 et 0,5.

Par ailleurs, afin de limiter au maximum la pénétration d'humidité au sein du câble (il est bien connu en effet que les performances optiques des fibres sont très nettement dégradées en présence d'humidité), le tube de protection interne peut contenir un matériau étanche, comme par exemple un gel thixotropique ou des filaments susceptibles de gonfler en présence d'eau.

La structure des câbles classiques qui vient d'être décrite permet de maintenir les propriétés de transmission des fibres optiques à un niveau acceptable, les différents éléments constituant le câble protégeant les fibres contre les efforts auxquels elles sont susceptibles d'être soumises lors de leur utilisation.

Le diamètre extérieur de ce genre de câbles (mesuré au niveau de la gaine extérieure mentionnée précédemment, sachant que des gaines supplémentaires peuvent être employées) est en général de l'ordre de 15 à 20 mm lorsque l'épaisseur de l'empilement de rubans varie entre 3 et 6 mm.

A l'heure actuelle, un souci constant est de diminuer l'encombrement des câbles à fibres optiques, et ce afin d'installer dans un conduit de section donnée une plus grande quantité de câbles, et donc d'augmenter la capacité de transmission des réseaux.

Or les câbles ayant la structure qui a été décrite ci-dessus ont un diamètre trop élevé.

Le but de la présente invention est donc de réaliser un câble à fibres optiques du type comprenant un empilement de rubans de fibres optiques, ayant un diamètre inférieur à celui des câbles connus pour une épaisseur de l'empilement de rubans donnée, tout en conservant les propriétés mécaniques et optiques des câbles connus.

La présente invention propose à cet effet un câble à fibres optiques comprenant:
- une pluralité de rubans de fibres optiques empilés les uns sur les autres, chacun desdits rubans comportant une pluralité de fibres optiques disposées côte à côte sensiblement dans un même plan et toutes noyées dans un revêtement commun appelé matrice dudit ruban,
- une gaine extérieure de protection pour assurer la protection du câble contre des efforts de compression radiaux,
- des éléments de renfort pour reprendre les efforts de traction appliqués au câble, caractérisé en ce qu'il contient en outre des éléments dits de remplissage, en un matériau à base de fibres de renfort, de coefficient de dilatation voisin de celui desdites fibres optiques, noyées dans une matrice de liaison, lesdits éléments de remplissage occupant partiellement ou entièrement un volume délimité d'une part par la surface externe de l'empilement de rubans, et d'autre part par la surface interne de ladite gaine extérieure, de sorte que l'ensemble constitué dudit empilement et desdits éléments de remplissage a une section transversale externe sensiblement circulaire, lesdits éléments de remplissage étant tels qu'ils sont capables de protéger lesdits rubans contre des efforts radiaux et longitudinaux appliqués audit câble et de s'opposer à une contraction dudit câble de plus de 0,2%.

Grâce à l'invention, à épaisseur de l'empilement de rubans donnée, on observe une diminution du diamètre extérieur du câble d'au moins 20 à 30% par rapport aux câbles de l'art antérieur.

Comme on le constate, le câble selon l'invention ne contient plus de tube de protection interne, le rôle de ce tube étant joué par les éléments de remplissage de l'invention. Ceci permet d'utiliser à profit tout ou partie de l'espace laissé libre entre l'empilement de rubans et le tube de protection interne dans les câbles de l'art antérieur. Les fonctions du tube de protection, c'est-à-dire la protection des fibres optiques contre les efforts longitudinaux et radiaux auxquels le câble peut être soumis, et la limitation des contractions de la gaine extérieure, sont assurées par les éléments de remplissage dont le module d'élasticité peut être choisi à cet effet, selon l'invention, entre 10000 et 55000 N/mm.

De manière avantageuse, le rapport entre la section transversale de l'empilement et celle du volume délimité par le contour interne des éléments de remplissage est compris entre 0,5 et 1. Le fait que les rubans puissent ne plus être libres dans la structure que jusqu'à un degré moindre que dans l'art antérieur n'est pas préjudiciable aux performances optiques du câble selon l'invention. En effet, la structure libre des câbles de l'art antérieur permet de protéger les fibres optiques contre les efforts longitudinaux subis par le reste du câble, surtout par les éléments de ce dernier constitués de matériaux plastiques (tube de protection et gaine extérieure en particulier). Etant donné que l'on a supprimé le tube de protection et que les éléments de remplissage contiennent des fibres de renfort constituées d'un matériau ayant un coefficient de dilatation plus proche de celui des fibres que les matériaux plastiques, la proportion de matériaux plastiques susceptibles de se contracter ou de se dilater longitudinalement est bien plus faible dans une section donnée du câble selon l'invention que dans une même section d'un câble de l'art antérieur. Ainsi, le fait d'utiliser une structure plus serrée n'entraîne pas une dégradation des performances optiques.

De manière avantageuse, les éléments de remplissage peuvent assurer la fonction des éléments de renfort noyés dans la gaine extérieure des câbles connus, ce qui permet de supprimer ces derniers dans la gaine extérieure, donc de diminuer l'épaisseur de cette gaine et par conséquent le diamètre extérieur du câble. Dans ce cas, les éléments de remplissage ont un module d'élasticité en traction et un allongement à la rupture supérieurs à ceux des fibres optiques.

D'autres caractéristiques et avantages de la présente invention apparaîtront dans la description suivante d'un mode de réalisation et d'un dispositif de fabrication d'un câble selon l'invention, donnés à titre illustratif et nullement limitatif.

Dans les figures suivantes :
- la figure 1 représente en perspective un câble selon l'invention,
- la figure 2 est une coupe transversale selon la ligne II-II de la figure 1,
- la figure 3 est un schéma simplifié d'un dispositif permettant de fabriquer un câble selon l'invention,
- la figure 4 représente en coupe transversale une première variante possible pour le câble selon l'invention,
- la figure 5 représente en coupe tranversale une deuxième variante possible pour le câble selon l'invention,
- la figure 6 représente en coupe tranversale une troisième variante possible pour le câble selon l'invention,
- la figure 7 représente en coupe tranversale une quatrième variante possible pour le câble selon l'invention.

Dans toutes ces figures, les éléments communs portent les mêmes numéros de référence.

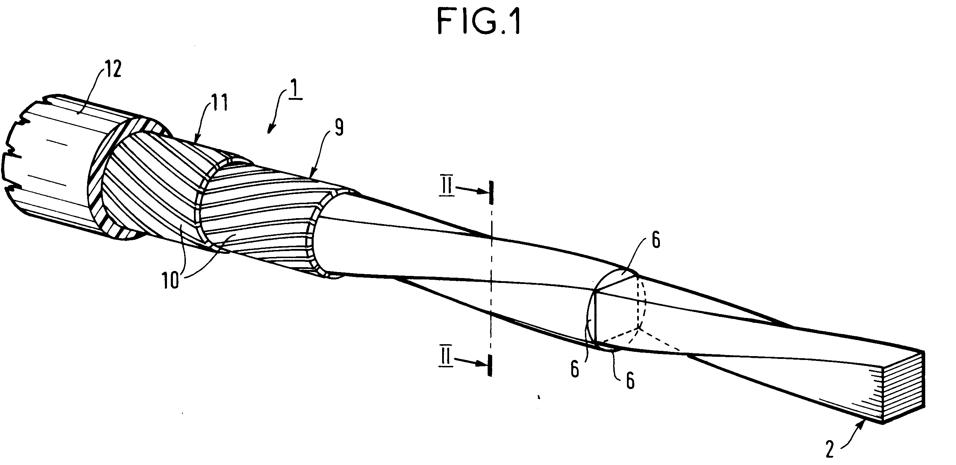

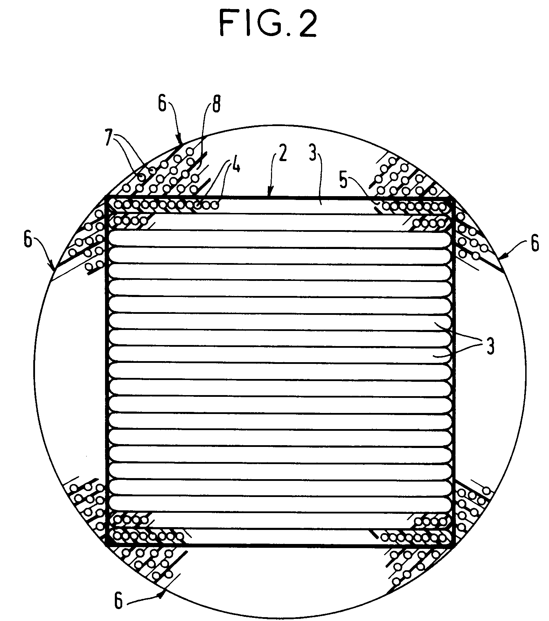

On voit aux figures 1 et 2 un câble 1 selon l'invention. Le câble 1 comprend un empilement 2 de rubans 3 de fibres optiques 4 (voir figure 2), par exemple jusqu'à 18 rubans. Chaque ruban 3 comprend une pluralité de fibres optiques 4 disposées côte à côte dans un même plan et noyées dans une matrice 5. A titre d'exemple, l'empilement 3 peut avoir une section transversale de l'ordre de 3 mm x 3,5 mm lorsqu'il comporte 12 rubans de 12 fibres chacun, de 3 mm x 5 mm lorsqu'il comporte 18 rubans de 12 fibres chacun, et de 4 mm x 5 mm lorsqu'il comprend 18 rubans de 16 fibres chacun.

Afin de permettre au câble 1 de subir des flexions sans dégrader les propriétés de transmission des fibres optiques 4, l'empilement 3 est enroulé en hélice sur lui-même à pas constant ou alterné (dit "SZ").

L'empilement 3 est entouré de quatre éléments de remplissage 6 selon l'invention. Chacun de ces éléments de remplissage est constitué de fibres 7 de verre, d'aramide ou autres, de coefficient de dilatation voisin de celui des fibres optiques 4, noyées dans un résine 8 à haut module d'élasticité, de sorte que le module d'élasticité des éléments de remplissage 6 peut en pratique varier entre 10000 et 55000 N/mm. La proportion de résine 8 dans la section transversale d'un élément de remplissage 6 est d'environ 10 à 25%, c'est-à-dire que, comme on l'a indiqué précédemment, la proportion totale de matière plastique dans une section transversale d'un câble selon l'invention est nettement réduite par rapport aux câbles de l'art antérieur.

Les fibres 7 peuvent être remplacées par des fils plus complexes, notamment des rubans de fibres de verre, d'aramide ou autre noyés dans une résine et formant donc des fils composites, ces fils composites étant ensuite noyés dans un matériau adapté. Ces fils composites sont par exemple du type de ceux commercialisés par la société NEPTCO sous la marque déposée FLEXLINE. lls se trouvent alors sous la forme de rubans d'environ 1,5 mm de largeur et 0,5 mm d'épaisseur.

A titre d'exemple, ces fils composites peuvent être noyés dans un matériau adhésif thermoplastique à base de polyamides, tel que celui commercialisé par la société HENKEL sous la marque déposée MACROMELT TPX 20-146.

Les fils composites peuvent également être noyés dans une polyoléfine telle qu'un copolymère d'éthylène et de propylène. Un tel matériau est commercialisé par exemple par la société EASTMAN sous la marque déposée M-5F.

Les éléments de remplissage 6 ont une section transversale en forme de portion de disque délimitée par une corde de longueur sensiblement égale soit à la hauteur de l'empilement 2, soit à sa largeur, selon la position que doit occuper l'élément de remplissage 6 dans le câble 1. La section transversale des éléments de remplissage 6 est en outre telle que l'ensemble qu'ils constituent avec l'empilement 2 a une section transversale externe sensiblement circulaire (voir figure 2). Dans l'exemple représenté, la section transversale de l'empilement 2 est rectangulaire.

Afin d'assurer une protection des rubans 3 notamment lorsque le câble 1 est soumis à des diminutions de température entraînant des contractions, en vue de maintenir les propriétés optiques de leurs fibres 4, il est préférable de disposer les éléments de remplissage 6 de manière à laisser libre une partie de l'espace entourant l'empilement 2. Ceci se traduit par un rapport entre la section transversale de l'empilement 2 et celle du volume délimité par le contour interne des éléments de remplissage 6 de préférence compris entre 0,5 et 1. Ce rapport est supérieur à celui utilisé dans les câbles de l'art antérieur, ce qui permet de réduire l'espace inutilisé dans le câble et donc le diamètre de ce dernier. En choisissant le module d'élasticité des éléments de remplissage 6 au moins égal à 25000 N/mm, et leur coefficient de dilatation voisin de celui des fibres optiques, c'est-à-dire inférieur à 8x10⁻⁶ lorsque les éléments de remplissage 6 ne remplacent pas entièrement les éléments de renfort classiques du câble insérés dans la gaine extérieure (voir plus loin), et inférieur à 20x10⁻⁶ lorsque les éléments de renfort classiques ne sont pas utilisés, il est possible de ramener le rapport précédent au voisinage de 1 (comme représenté en figure 2), c'est-à-dire de diminuer encore le diamètre du câble en limitant l'espace inoccupé dans ce dernier. Ainsi, le module d'élasticité et le coefficient de dilatation choisis pour les éléments de remplissage 6 leur permettent d'assurer les fonctions assurées dans l'art antérieur par le tube de protection et par l'utilisation d'une structure libre.

Les éléments de remplissage 6 suivent en outre l'enroulement hélicoïdal ou SZ de l'empilement 3.

Autour des éléments de remplissage 6, on trouve une première couche 9 de douze rubans de renfort 10 de type FLEXLINE (voir plus haut) enroulés hélicoïdalement et retenus ensemble au moyen d'un matériau adhésif adapté (non référencé). Cette couche 9 sert notamment à assurer le maintien en place des éléments de remplissage 6 et à compléter la tenue mécanique du câble 1 lorsque cela est nécessaire. Les rubans 10 ont ainsi un module d'élasticité compris de préférence entre 20000 et 45000 N/mm.

Lorsqu'elle n'est pas exclusivement constituée de rubans de renfort 10, la couche 9 peut contenir environ 10% de rubans susceptibles de gonfler en présence de liquide afin d'assurer en outre l'étanchéité du câble 1 au niveau des fibres optiques 4.

Eventuellement, une deuxième couche 11, similaire à la couche 9, peut être disposée autour de cette dernière en étant enroulée dans le sens inverse de manière à obtenir un plan neutre de courbure lors de la flexion du câble 1.

Enfin, le câble 1 selon l'invention comporte une gaine extérieure 12 par exemple en polyéthylène haute densité. Le matériau constituant la gaine 12 est de manière plus générale un matériau ayant un module d'élasticité élevé, de l'ordre de 1300 N/mm, et de préférence compris entre 1000 et 4000 N/mm.

Les couches optionnelles 9 et 11 assistent les éléments de remplissage 6 pour limiter les contractions excessives de la gaine extérieure 12 lors de variations de température. Elles permettent en outre d'assurer une bonne étanchéité du câble 1.

De manière avantageuse grâce à la présente invention, on peut en outre choisir les éléments de remplissage 6 de sorte qu'ils aient un module d'élasticité en traction et un allongement à la rupture supérieurs à ceux des fibres 4. De cette manière, il est possible de ne pas utiliser d'éléments de renfort supplémentaires dans la gaine extérieure 12 (ainsi que représenté en figure 1) ou bien diminuer la section de ces éléments de renfort, et ainsi de limiter l'épaisseur de cette dernière et donc le diamètre extérieur du câble 1. Ainsi, lorsque le module d'élasticité des éléments de remplissage 6 est compris entre 25000 et 55000 N/mm et leur allongement à la rupture supérieur ou égal à 2%, les éléments de renfort peuvent être supprimés.

Grâce à l'invention, on diminue le diamètre d'un câble à fibres optiques du type à empilement de rubans en réalisant une structure plus serrée autour de l'empilement de rubans, en supprimant le tube interne de protection et éventuellement en supprimant les éléments de renfort dans la gaine extérieure ou en réduisant leur section.

On constate effectivement qu'avec un câble selon l'invention, la contraction de la structure due à des variations de température n'entraîne pas une contraction à absorber par les rubans supérieure à celle que l'on observe avec les câbles de l'art antérieur. A titre indicatif, lorsqu'un câble selon l'invention est soumis à une diminution de température, la contraction totale du câble est inférieure à 0,1 % et peut varier entre 0,03 et 0,08%. Dans l'art antérieur, pour une même diminution de température, la contraction du câble est de 0,15 à 0,2%. On voit donc que la structure du câble selon l'invention permet de mieux protéger les fibres optiques contre les contractions que peut subir le câble.

Le câble 1 selon l'invention est en outre plus résistant à la traction, à section égale, qu'un câble de l'art antérieur. Ainsi, dans un câble de l'art antérieur, pour un allongement maximal autorisé des fibres optiques de 0,15%, l'effort maximal en traction qui peut être supporté est de 1740 N. Cet effort est de 2610 N pour un câble selon l'invention.

Le câble 1 selon l'invention est par ailleurs moins onéreux à réaliser que les câbles de l'art antérieur, du fait de la proportion moins importante de matériaux plastiques qu'il contient.

Enfin, le câble selon l'invention présente une meilleure résistance au feu que les câbles de l'art antérieur également du fait de sa moindre teneur en matériaux plastiques, et de sa teneur plus élevée en matériaux vitreux ou similaires.

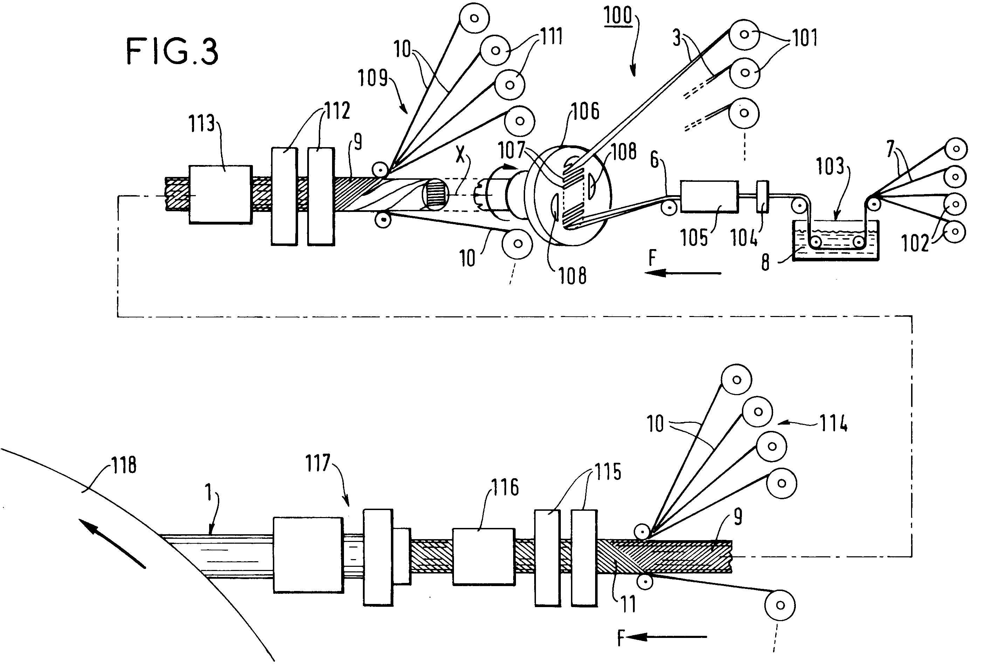

On va décrire à présent une méthode possible de fabrication d'un câble selon l'invention tel que le câble 1, en référence à la figure 3 qui représente schématiquement un dispositif de fabrication adapté 100.

Le dispositif 100 comprend huit dévideurs 101 de rubans de fibres optiques 3 (seuls trois d'entre eux sont représentés en figure 3 pour des raisons de clarté). Il comprend en outre, parallèlement aux dévideurs 101, quatre séries de dévideurs 102 de fibres de renfort 7 (une seule de ces séries est représentée en figure 3 pour des raisons de clarté, et en pratique, il y a autant de séries de dévideurs 102 que d'éléments de remplissage 6 nécessaires pour réaliser le câble 1), suivies, dans le sens de défilement des rubans dans le dispositif 100, indiqué par la flèche F, d'un bain 103 de résine 8 polymérisable à chaud ou par rayonnement ultraviolet, puis d'un ensemble de quatre filières 104 (une seule a été représentée en figure 3) à travers lesquelles passent les fibres 7 enduites de résine 8 pour leur donner la section souhaitée (portion de disque dans l'exemple du câble 1). Ces filières 104 sont suivies d'un four 105 de polymérisation à chaud ou par rayonnement ultraviolet, selon le type de la résine 8 utilisée, pour faire durcir cette dernière et terminer ainsi la réalisation des éléments de remplissage 6.

Les rubans 3 en provenance des dévideurs 102, et les éléments de remplissage 6 traversent ensuite une seconde filière 106 destinée à placer les différents éléments dans leurs positions définitives dans le câble 1. La filière 106 comporte à cet effet plusieurs ouvertures rectangulaires 107, disposées les unes sous les autres, pour le passage des rubans 3, et quatre ouvertures 108 en forme de portion de disque correspondant sensiblement à la section transversale des éléments de remplissage 6 et entourant les ouvertures 107. Pour réaliser la structure enroulée à pas constant ou SZ de l'empilement 2, on peut par exemple animer la filière 106 d'un mouvement de rotation autour de l'axe de défilement X du dispositif 100.

La filière 106 est suivie d'un poste d'assemblage 109 des rubans de renfort 10, au niveau duquel on trouve une pluralité de bobines de stockage 111 des rubans 10 dévidant ces derniers de sorte qu'ils s'enroulent hélicoïdalement autour de l'ensemble constitué des rubans 3 et des éléments de remplissage 6. Le poste d'assemblage 109 est suivi de moyens 112 servant à appliquer le matériau adhésif de liaison permettant d'obtenir la couche 9, puis d'un dispositif 113 assurant le durcissement de ce matériau.

En aval du dispositif 113, on trouve un second poste d'assemblage 114 de rubans 10, identique au poste 109 à l'exception du fait qu'il assure l'enroulement hélicoïdal des rubans 10 en sens inverse par rapport au poste 109. Le poste d'assemblage 114 est suivi également de moyens d'application 115 de matériau adhésif de liaison sur les rubans 10, et d'un dispositif 116 assurant le durcissement de ce matériau.

Enfin, le dispositif 100 comprend des moyens 117 pour extruder autour de l'ensemble réalisé la gaine extérieure 12, et une bobine 118 de stockage du câble 1 terminé.

Bien entendu, l'invention n'est pas limitée au mode de réalisation particulier qui vient d'être décrit.

En particulier, notamment lorsque la structure du câble n'est pas complètement serrée, on peut disposer, entre les éléments de remplissage 6 et l'empilement de rubans 2, un gel d'étanchéité, des filaments susceptibles de gonfler en présence de liquide ou encore une poudre gonflable en présence de liquide.

De manière plus générale, pour parfaire l'étanchéité d'un câble selon l'invention, on peut revêtir l'ensemble constitué des éléments de remplissage au moyen d'un gel d'étanchéité ou de tout autre revêtement étanche adapté.

Les couches 9 et 11 de rubans de renfort 10 ne sont pas nécessaires, et elles peuvent ne pas être présentes dans le câble selon l'invention. On notera que ces couches sont toujours disposées de manière à obtenir un plan neutre de courbure lors de la flexion du câble.

La section de l'empilement n'est pas nécessairement rectangulaire. Elle peut être quelconque, notamment si tous les rubans utilisés n'ont pas la même largeur. Dans ce cas, la section des éléments de remplissage est adaptée au contour de l'empilement de rubans de manière à occuper le moins d'espace possible.

Lorsque les éléments de remplissage ne jouent pas le rôle d'éléments de renfort, des éléments de renfort sont insérés dans la gaine extérieure 12, conformément à la structure des câbles de l'art antérieur.

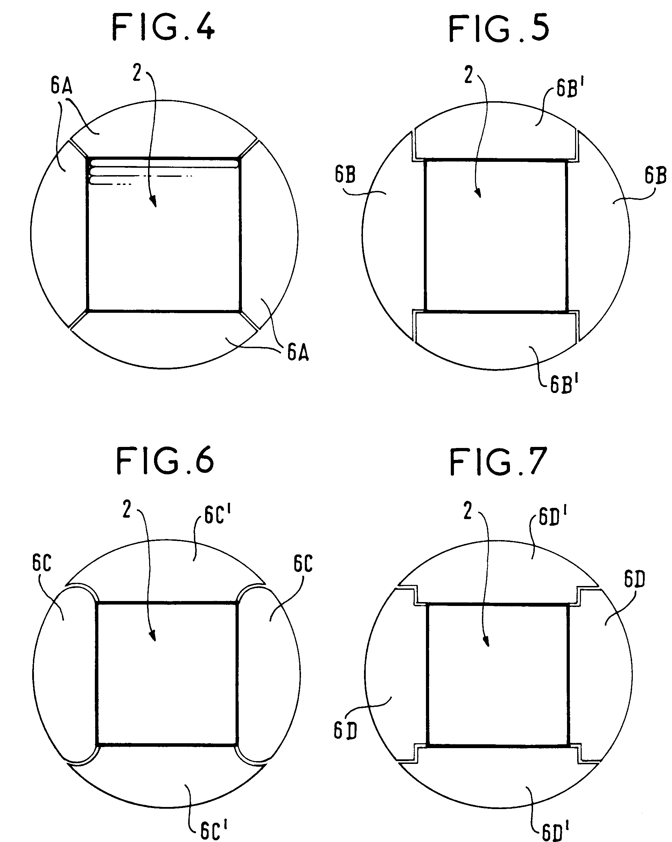

La section des éléments de remplissage 6 n'est pas nécessairement celle représentée aux figures 1 et 2. On montre très schématiquement en figure 4 une autre section possible pour les éléments de remplissage 6A.

On voit par ailleurs aux figures 5, 6 et 7, très schématiquement encore, des variantes de la section des éléments de remplissage 6B et 6B', 6C et 6C', et 6D et 6D' respectivement dans lesquels ces éléments de remplissages présentent des épaulements ou rainures destinés à coopérer avec des épaulements ou nervures correspondants des éléments de remplissage voisins de manière à assurer une meilleure tenue de l'ensemble des éléments de remplissage les un avec les autres.

D'autre part, dans le dispositif 100, pour obtenir une structure hélicoïdale ou à pas SZ de l'empilement 2, on peut, au lieu d'animer la filière 106 d'un mouvement de rotation autour de l'axe X, disposer immédiatement après le dispositif 113 une bobine tournante autour de l'axe X, et réaliser la couche 11 en reprise sur une autre ligne.

Enfin, toutes les valeurs numériques données ne le sont qu'à titre indicatif, ainsi que les exemples de matériaux utilisés.

## Revendications

**1/** Câble à fibres optiques comprenant:
- une pluralité de rubans de fibres optiques empilés les uns sur les autres, chacun desdits rubans comportant une pluralité de fibres optiques disposées côte à côte sensiblement dans un même plan et toutes noyées dans un revêtement commun appelé matrice dudit ruban,
- une gaine extérieure de protection pour assurer la protection du câble contre des efforts de compression radiaux,
- des éléments de renfort pour reprendre les efforts de traction appliqués au câble, caractérisé en ce qu'il contient en outre des éléments dits de remplissage, en un matériau à base de fibres de renfort, de coefficient de dilatation voisin de celui desdites fibres optiques, noyées dans une matrice de liaison, lesdits éléments de remplissage occupant partiellement ou entièrement un volume délimité d'une part par la surface externe de l'empilement de rubans, et d'autre part par la surface interne de ladite gaine extérieure, de sorte que l'ensemble constitué dudit empilement et desdits éléments de remplissage a une section transversale externe sensiblement circulaire, lesdits éléments de remplissage étant tels qu'ils sont capables de protéger lesdits rubans contre des efforts radiaux et longitudinaux appliqués audit câble et de s'opposer à une contraction dudit câble de plus de 0,2%.

**2/** Câble selon la revendication 1 caractérisé en ce que le module d'élasticité desdits éléments de remplissage est compris entre 10000 et 55000 N/mm.

**3/** Câble selon l'une des revendications 1 ou 2 caractérisé en ce que le rapport entre la section transversale dudit empilement et celle du volume délimité par le contour interne desdits éléments de remplissage est compris entre 0,5 et 1

**4/** Câble selon l'une des revendications 1 à 3 caractérisé en ce que lesdits éléments de renfort sont constitués par lesdits éléments de remplissage qui ont à cet effet un module d'élasticité compris entre 25000 et 55000 N/mm et un allongement à la rupture au moins égal à 2%.

**5/** Câble selon l'une des revendications 1 à 3 caractérisé en ce que, lorsque le coefficient de dilatation desdits éléments de remplissage est inférieur à 8.10⁻⁶ et leur module d'élasticité supérieur à 25000 N/mm, le rapport entre la section transversale dudit empilement et celle du volume délimité par le contour interne desdits éléments de remplissage est sensiblement égal à 1.

**6/** Câble selon la revendication 4 caractérisé en ce que, lorsque le coefficient de dilatation desdits éléments de remplissage est inférieur à 20.10⁻⁶ et leur module d'élasticité supérieur à 25000 N/mm, le rapport entre la section transversale dudit empilement et celle du volume délimité par le contour interne desdits éléments de remplissage est sensiblement égal à 1.

**7/** Câble selon l'une des revendications 1 à 6 caractérisé en ce que le rapport entre la section occupée par ladite matrice de liaison et la section totale de l'un desdits éléments de remplissage est compris entre 10 et 25%.

**8/** Câble selon l'une des revendications 1 à 7 caractérisé en ce que lesdits éléments de remplissage sont entourés d'au moins une couche de rubans de renfort maintenus solidaires les uns des autres au moyen d'un matériau adhésif de liaison, ladite couche assurant le maintien en place desdits éléments de remplissage autour dudit empilement.

**9/** Câble selon la revendication 8 caractérisé en ce que lesdits rubans de renfort sont enroulés hélicoïdalement autour desdits éléments de remplissage.

**10/** Câble selon la revendication 9 caractérisé en ce qu'une deuxième couche de rubans de renfort est disposée autour de la première avec un sens d'enroulement opposé à celui de cette dernière.

**11/** Câble selon l'une des revendications 1 à 10 caractérisé en ce que ledit empilement est enroulé sur lui-même à pas constant ou alterné.

**12/** Câble selon l'une des revendications 1 à 11 caractérisé en ce qu'il comporte en outre des moyens pour assurer l'étanchéité au niveau desdits rubans de fibres optiques.

**13/** Câble selon la revendication 12 caractérisé en ce que lesdits moyens pour assurer l'étanchéité sont choisi parmi un gel d'étanchéité dans lequel est noyé ledit empilement, des filaments susceptibles de gonfler en présence de liquide et insérés entre ledit empilement et lesdits éléments de remplissage, et une poudre susceptible de gonfler en présence d'un liquide et insérée entre ledit empilement et lesdits éléments de remplissage.

**14/** Câble selon l'une des revendications 1 à 13 caractérisé en ce que l'ensemble constitué desdits éléments de remplissage est revêtu au moyen d'un gel d'étanchéité ou de tout autre revêtement étanche adapté.

**15/** Dispositif pour la fabrication d'un câble selon l'une des revendications 1 à 14 caractérisé en ce qu'il comprend :
- des moyens d'approvisionnement en rubans,
- des moyens d'approvisionnement en fibres de renfort,
- des moyens d'application dudit matériau de liaison auxdites fibres de renfort rassemblées pour former lesdits éléments de remplissage,
- une filière pour donner auxdits éléments de remplissage dont le matériau de liaison n'est pas encore solidifié la section adaptée,
- des moyens de solidification dudit matériau de liaison,
- des moyens pour assembler lesdits rubans en provenance de leurs moyens d'approvisionnement afin de former ledit empilement,
- des moyens pour disposer lesdits éléments de remplissage autour dudit empilement,
- des moyens pour réaliser ladite gaine extérieure autour desdits éléments de remplissage.

**16/** Dispositif selon la revendication 15 caractérisé en ce que lesdits moyens pour assembler lesdits rubans et lesdits moyens pour disposer lesdits éléments de remplissage autour dudit empilement sont constitués d'une pièce tournant autour d'un axe de défilement dudit câble dans ledit dispositif, ladite pièce présentant des ouvertures percées de part en part le long dudit axe de défilement, et adaptées pour le passage dudit empilement et desdits éléments de remplissage, de sorte qu'en sortie de ladite pièce, lesdits rubans sont assemblés et entourés desdits éléments de remplissage.
